# FASCICULE DE BREVET EUROPEEN

(11) **EP 2 251 123 B1**
(45) Date de publication et mention de la délivrance du brevet: **21.03.2012**
(21) Numéro de dépôt: 09160073.4
(22) Date de dépôt: 12.05.2009
(51) Int. Cl.: B23B 31/16, B25B 5/08, B25J 15/02

(54) **Procédé et dispositif pour maintenir une pièce lors de son usinage**
Verfahren und Vorrichtung zum Halten eines Werkstücks während seiner Bearbeitung
Method and device for holding a part while it is being machined

(43) Date de publication de la demande: 17.11.2010
(73) Titulaire: Yerly, Michel, 2864 Soulce (CH)
(72) Inventeur: Yerly, Michel, 2864 Soulce (CH)
(74) Mandataire: P&TS SA (AG, Ltd.)

(56) Documents cités:
- GB-A- 1 551 545
- GB-A- 2 329 858
- JP-A- 61 279 449

## Description

La présente invention concerne un procédé et un dispositif, notamment un mandrin, pour maintenir une pièce lors de son usinage. La présente invention concerne en particulier un dispositif permettant de maintenir une pièce fixe face à un outil mobile, notamment dans un centre d'usinage à plusieurs axes.

### Etat de la technique

De nombreuses solutions existent dans l'art antérieur pour maintenir une pièce lors de son usinage. On connaît notamment des mandrins munis de plusieurs mors qui se déplacent radialement afin de maintenir la pièce à usiner par ses flancs. Le déplacement radial des mors est souvent actionné par un ou plusieurs pistons qui se déplacent longitudinalement, selon une direction perpendiculaire au plan de déplacement des mors. Une ou plusieurs surfaces obliques permettent de convertir les déplacements longitudinaux du piston en déplacements radiaux réciproques des mors, dans un plan perpendiculaire à l'axe longitudinal du piston. Le piston est par exemple actionné par un système pneumatique ou hydraulique, par exemple à l'aide d'un vérin pneumatique.

EP-A1-1364746 décrit un mandrin palettisable comportant des moyens de fixation pour le fixer de manière amovible et reproductible sur une palette.

EP-A1-1918066 décrit un dispositif support de pièce permettant de maintenir une pièce à la fois par ses faces latérales et par appui contre sa face supérieure.

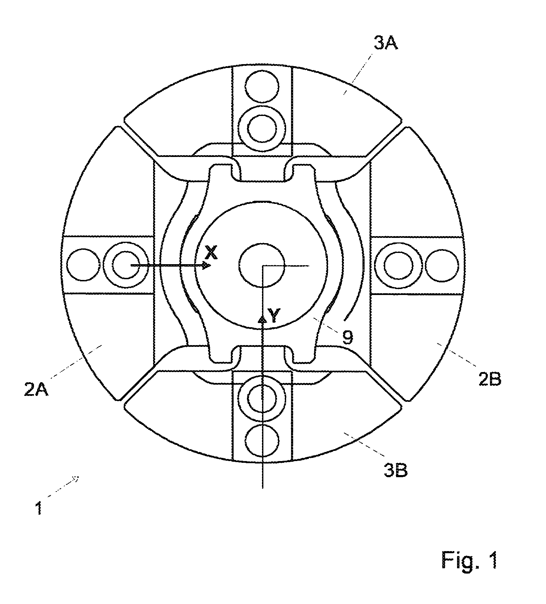

La figure 1 décrit un exemple d'un tel mandrin comportant une première paire de mors 2A-2B et une deuxième paire de mors 3A-3B pour serrer une pièce 9 destinée à être usinée. Les deux paires de mors peuvent être actionnées par le même piston, ou par des pistons différents.

Dans cet exemple, la pièce à usiner 9 est une carrure de montre avec une section non circulaire. Au serrage, la distance entre les deux mors 2A -2B de la première paire est différente de la distance entre les deux mors 3A - 3B de la seconde paire. Les mandrins connus permettent d'adapter la forme des mors à la pièce à usiner, et/ou de modifier la position radiale des mors sur un support de mors non représenté, afin de tenir compte de ces distances différentes. Il est ainsi possible de serrer entre deux paires de mors des pièces rectangulaires, ovales ou de forme quelconque.

Il arrive cependant que les dimensions externes de la pièce 9 à usiner ne soient pas parfaitement connues, ou que ces distances varient d'une pièce à l'autre au sein d'un même lot. Cette situation se produit par exemple, mais pas seulement, lorsque la pièce 9 a été polie ou usinée manuellement. Dans ce cas, si les proportions de la pièce ne correspondent pas à celles prévues, il est possible qu'une des paires de mors entre en contact avec la pièce avant l'autre paire. Comme les mors s'arrêtent dès qu'ils sont en appui contre la pièce, il se peut alors que la pièce soit tenue seulement par une paire de mors, tandis que les deux autres mors de l'autre paire s'arrêtent avant de toucher ou de tenir fermement la pièce. La pièce est alors mal tenue, ou mal centrée, et l'usinage risque de ne pas s'effectuer de manière correcte.

Un autre problème se pose lorsque la pièce n'est pas centrée sur le mandrin lors de la pose avant le serrage des mors. Dans ce cas, il arrive que la pièce soit bloquée par une paire de mors avant qu'elle n'ait été recentrée entre les deux mors de l'autre paire. A nouveau, cette situation aboutit fréquemment à des pièces mal tenues par certains mors, ou mal centrées selon au moins un des axes.

US20080157487 décrit un mandrin comportant plusieurs paires de mors actionnables indépendamment à l'aide de plusieurs vérins. Il est possible d'adapter la position finale des mors en modifiant la course des vérins selon les différents axes, ce qui permet de tenir des pièces excentriques. Ce dispositif requiert cependant plusieurs vérins indépendants, et une commande de vérins plus complexe à programmer.

GB2329858 décrit un dispositif pour maintenir une pièce, dans lequel chaque paire de mors est indépendamment entrainée par un piston. Les paires de mors, qui se déplacent selon deux directions perpendiculaires X et Y, peuvent être actionnés soit simultanément soit avec une petite différence temporale. La première paire de mors maintient une pièce selon la direction Y; la deuxième paire maintient ladite pièce selon la direction X. Si la pièce serrée par la première paire de mors n'est pas bien placée long la direction X, la deuxième paire de mors peut corriger cet offset puisque elle a une plus grande force de serrage qui lui est conférée par le mécanisme décrit dans le document. On peut aussi maintenir une pièce qui n'a pas les mêmes dimensions selon les directions X et Y, par exemple une pièce avec une forme d'un rectangle ou d'une ellipse ou avec n'importe quelle forme.

### Bref résumé de l'invention

Un but de la présente invention est de proposer un dispositif et un procédé de serrage de pièces exempts des limitations des dispositifs et des procédés connus.

Selon l'invention, ces buts sont atteints notamment au moyen d'un dispositif et d'un procédé selon les caractéristiques des revendications indépendantes de type correspondant.

En particulier, selon un aspect de l'invention, la pièce est serrée entre au moins deux paires de mors actionnées par un seul piston mais qui entrent en contact avec la pièce à usiner en des instants légèrement décalés. La pièce est ainsi recentrée par la première paire de mors sans être bloquée, puis recentrée par la deuxième paire de mors avant le blocage définitif entre toutes les paires de mors.

L'invention s'applique aussi à des mandrins dans lesquels les mors sont arrangés par triplets plutôt que par paires, les mors de chaque triplet étant déplacés simultanément. Dans ce cas, les mors d'un des triplets sont en contact avec la pièce avant les mors du ou des autres triplets.

Par ailleurs, le mandrin peut aussi comprendre plus de deux paires (ou triplets); par exemple trois paires de mors. Le déplacement d'une des paires ou d'un des triplets de mors est alors avantageusement déphasé par rapport au déplacement des deux autres paires ou triplets. Il est aussi possible de prévoir un premier déphasage entre la première paire et la seconde paire de mors, et un deuxième déphasage entre la deuxième et la troisième paire de mors.

Les mors de chaque paire se déplacent réciproquement, c'est-à-dire dans la même direction mais en sens opposé. Il est aussi possible d'utiliser un mors fixe et un mors mobile repoussant la pièce à usiner contre le mors fixe.

Les mors se déplacent radialement, dans un plan perpendiculaire à l'axe z du piston entraînant les supports de mors. L'invention s'applique par ailleurs également à des mandrins comportant des mors supplémentaires pour plaquer la pièce contre le mandrin.

La pièce à usiner est typiquement maintenue et serrée en rapprochant les deux mors de chaque paire vers le centre du mandrin, de manière à tenir la pièce par ses faces externes. L'invention s'applique cependant aussi à des mandrins permettant de tenir des pièces creuses par une face interne, à l'aide de mors qui s'écartent l'un de l'autre lors du serrage de la pièce.

Les mors des différentes paires, ou même à l'intérieur d'une paire, peuvent avoir des formes différentes pour tenir compte de la pièce à usiner. Il est aussi possible de monter les mors de manière décalée sur leur support de mors, par exemple afin de tenir des pièces excentriques ou avec des dimensions différentes selon différents axes. Indépendamment de ces ajustements, le mécanisme d'entraînement des mors est arrangé pour permettre à une paire de mors de poursuivre son déplacement plus longtemps que l'autre paire de mors, notamment pour compenser des tolérances dimensionnelles, et pour garantir un centrage parfait d'une pièce sur le mandrin.

La différence entre la longueur de course des deux paires de mors est de préférence minime, par exemple inférieur à 5 millimètre, de préférence inférieure à 1 millimètre, et typiquement de l'ordre de 0,5 millimètre. On évite ainsi des délais indésirables qui seraient occasionnés si la deuxième paire de mors devait encore parcourir un chemin important après l'arrêt de la première de mors. Cette différence est cependant suffisante pour permettre un recentrage de la pièce selon l'axe de déplacements de la deuxième paire de mors après le contact avec la première paire de mors.

### Brève description des figures

Des exemples de mise en oeuvre de l'invention sont indiqués dans la description illustrée par les figures annexées dans lesquelles :

La figure 1, déjà discutée, est une vue de face d'un mandrin comportant deux paires de mors pour serrer une pièce 9.

La figure 2 est une vue en coupe partielle montrant différents éléments d'un mandrin selon l'invention.

La figure 3A est une vue en coupe d'un deuxième support mobile 4 (support inférieur) actionné longitudinalement par le piston pour entraîner le déplacement radial de la deuxième paire de mors 3A-3B.

La figure 3B est une vue de dessus du deuxième support mobile 4.

La figure 4A est une vue en coupe d'un premier support mobile 5 (support supérieur) actionné longitudinalement par le piston pour entraîner le déplacement radial de la première paire de mors 2A-2B.

La figure 4B est une vue de dessus du premier support mobile 5.

La figure 5A est une vue en coupe du premier et du deuxième supports superposés avant le serrage par la deuxième paire de mors.

La figure 5B est une vue en coupe du premier et du deuxième supports superposés après le serrage par la deuxième paire de mors.

### Exemple(s) de mode de réalisation de l'invention

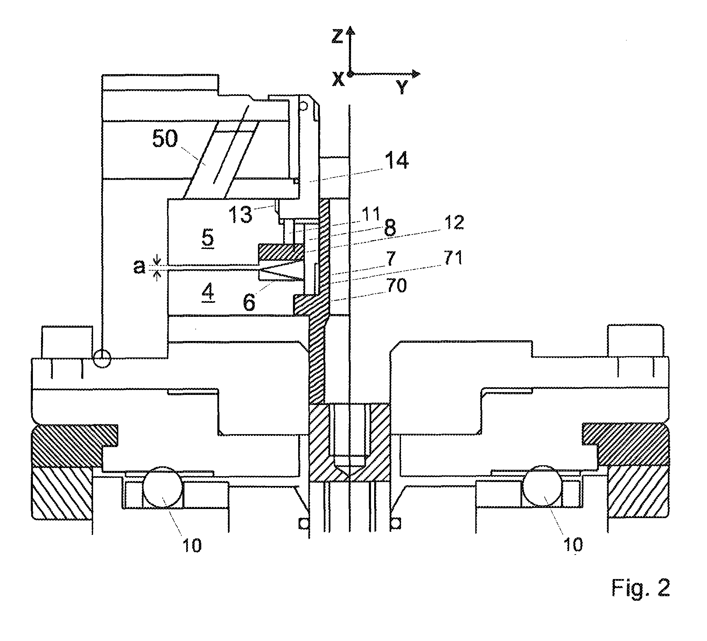

La figure 2 est une vue en coupe partielle d'un mandrin 1 selon l'invention ; seuls les principaux éléments nécessaires à la compréhension de l'invention ont été illustrés. Le mandrin comporte un piston 7 entraîné par un vérin, par exemple un vérin pneumatique, de manière à pouvoir se déplacer selon son axe longitudinal z. Le terme piston doit être compris de manière large et inclut par exemple aussi une tige, une bielle ou tout élément déplaçable longitudinalement sous l'action d'un actuateur.

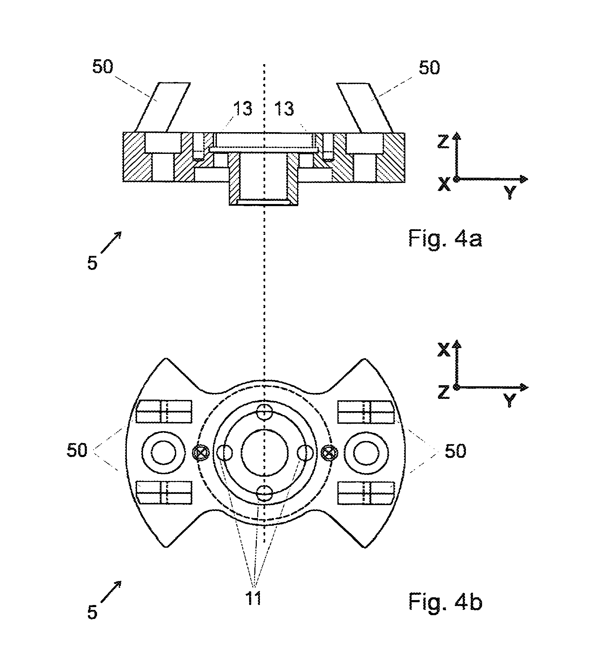

Un support mobile supérieur 5 (ou premier support mobile, illustré sur les figures 4A et 4B) est lié solidairement au piston 7, et suit les déplacements longitudinaux en z de ce piston. Ce support comporte deux paires de surfaces inclinées 50 permettant de convertir les déplacements en z du piston 7 et du support 5 en déplacements radiaux selon l'axe y de la première paire de mors 2A, 2B. Dans cet exemple, l'axe y est perpendiculaire au piston 7 dans le plan de la figure 2 ; chaque paire de surfaces obliques 50 permet de diriger et d'entraîner un des deux mors de la première paire 2A-2B.

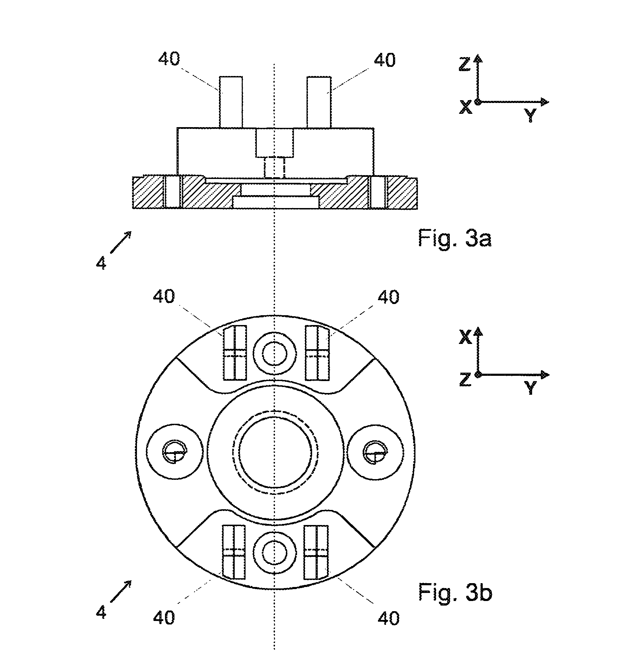

Le premier support mobile 5 est superposé par-dessus un deuxième support mobile 4, de manière à entraîner ce deuxième support 4 selon l'axe longitudinal z lorsque le premier support 5 est déplacé vers le bas de la page sous l'action du piston 7. Le deuxième support mobile 4 comporte également des surfaces obliques 40 (visibles notamment sur les figures 3A et 3B) qui permettent de convertir les déplacements longitudinaux en z du support 4 en déplacements radiaux dans la direction x perpendiculaire au plan de la figure 2 des deuxièmes mors 3A, 3B en appui contre ces surfaces obliques. Dans l'exemple illustré, le support mobile 4 comporte deux paires de surface obliques 40, chaque paire étant en contact avec un des deux mors 3A respectivement 3B de la deuxième paire de mors.

Une saillie 70 sur la surface externe du piston 7 vient en butée contre le support mobile inférieur 4 lorsque le piston remonte pour écarter les mors, afin de ramener la deuxième paire de mors 3A et 3B en position lorsque le mandrin est ouvert.

Les deux supports mobiles 4 et 5 sont séparés par un élément déformable élastiquement 6 logé dans un logement 51 entre les deux supports. Dans un mode de réalisation, l'élément 6 est constitué par une ou plusieurs rondelles élastiques, en caoutchouc ou en élastomère, compressible élastiquement ; d'autres éléments peuvent être utilisés, y compris par exemple des ressorts à pans, des rondelles élastiques en acier, ou des éléments élastiques agissant sur les faces externes des deux supports 4 et 5.

Au repos (c'est-à-dire lorsqu'aucune pièce n'est maintenue entre les mors), les deux supports mobiles 4 et 5 sont séparés par un interstice a, déterminé au moins en partie par l'élément élastique 6. La référence 14 désigne une douille de réglage vissée sur le support mobile supérieure 5, et permettant de comprimer l'élément élastique 6 par l'intermédiaire d'une bague en acier (ou rondelle) 12 autour du piston 7, et par l'intermédiaire de goupilles d'appui 11 traversant le support 5 et appuyant sur la face supérieure de la bague 12. Il est possible de régler la distance a entre les deux supports 4, 5 en vissant ou en dévissant la douille de réglage 14, de manière à comprimer l'élément élastique 6 par l'intermédiaire de la bague 12.

La référence 8 désigne une portion du support mobile supérieur 5 qui est munie d'un filetage 71, par exemple un filetage M14X1, afin de monter le support 5 de manière solidaire sur le piston 7. Les références 10 désignent des billes permettant de placer le dispositif de maintien de manière amovible et reproductible sur une palette, en liant le piston à un vérin non représenté.

Afin de serrer les mors 2A-2B et 3A-3B, le piston 7 doit être tiré vers le bas sous l'action du vérin, dans la direction de l'axe z. Les déplacements du piston 7 sont directement transmis au support mobile supérieur 5, par le filetage 71. Ce support supérieur 5 repousse à son tour le support mobile inférieur 4 par l'intermédiaire de l'élément élastique 6. Lors du serrage d'une pièce 9, au débit de la course du piston 7, les deux supports 4 et 5 se déplacent donc simultanément vers le bas, et provoquent un déplacement simultané des deux paires de mors correspondantes.

Les figures 3A, 3B, 4A et 4B illustrent un mode de réalisation possible des deux supports mobiles. Dans cet exemple, le support inférieur 4 a une section circulaire et comporte un dégagement pour loger et positionner le support supérieur 5 par-dessus. Les deux supports emboités l'un sur l'autre constituent ainsi un élément approximativement cylindrique traversé par le piston 7 et muni de huit surfaces obliques 40 respectivement 50 sur la surface supérieure, afin de déplacer quatre mors 2A, 2B, 3A, 3B selon quatre directions orthogonales.

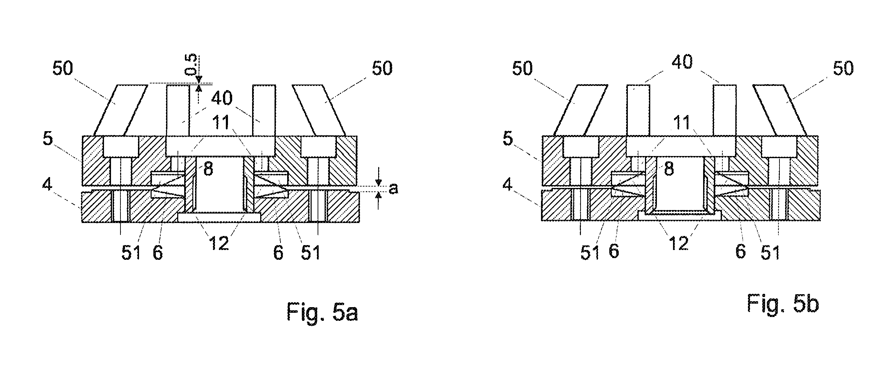

La position relative des deux supports mobiles au repos ainsi qu'au début de la course du piston est illustrée sur la figure 5a. Comme on peut le voir, dans cette position, les surfaces obliques 40 liées au deuxième support 4 sont légèrement en retrait par rapport aux surfaces obliques 50 liées au premier support 5 ; dans un mode de réalisation, le décalage atteint 0,5 millimètre, ou de préférence moins d'un millimètre, en tous les cas moins de 5 millimètres. En raison de ce décalage, les deuxièmes mors 3A, 3B liés au deuxième support 4 atteignent donc normalement la pièce à usiner 9 avant les premiers mors 2A, 28 qui ont un chemin à parcourir plus important.

Un retard équivalent peut être obtenu sans modification des surfaces 40, 50, par exemple en changeant la forme des mors, l'inclinaison des surfaces obliques, et/ou en modifiant la fixation des mors sur les surfaces obliques. La modification proposée au niveau de la hauteur des surfaces obliques permet cependant de provoquer un déphasage des mors même lorsque tous les mors sont montés de la même façon sur les supports de mors, et donc sans nécessiter de connaissances de la part de l'utilisateur.

Lorsque la deuxième paire de mors 3A-3B entre en contact avec la pièce à usiner 9, celle-ci est tout d'abord centrée le long de l'axe y de déplacement de ces deux mors, puis serrée entre ces deux mors. La force de serrage initiale est suffisante pour centrer et maintenir provisoirement la pièce, mais sans la bloquer fermement.

Lorsque le piston 7 continue sa course vers le bas de la figure 2, le déplacement du deuxième support mobile 4 est empêché (ou moins ralenti) par les deuxièmes mors 3A, 3B en butée contre la pièce et qui ne peuvent donc plus se déplacer.

Le piston 7 poursuit ensuite sa course vers le bas, en entraînant uniquement le premier support mobile 5. La saillie 70 autour de ce piston quitte son appui contre le deuxième support 4. Le déplacement du premier support mobile 5 contre le deuxième support 4 qui est fixe provoque la compression de l'élément élastique 6 entre ces deux supports. Les deux supports se rapprochent ainsi de l'autre en réduisant la hauteur de l'interstice a, comme illustré sur la figure 5B. Ce mouvement indépendant du premier support 5 est transmis aux mors 2A, 2B de la première paire, qui peuvent ainsi rattraper leur retard sur les mors 3A, 3B de la deuxième paire, afin de recentrer la pièce selon l'axe de déplacement des deuxièmes mors, puis de serrer cette pièce.

Pendant une brève période, la pièce 9 à usiner est donc maintenue uniquement par les deuxièmes mors 3A, 3B. Il est important que ce maintien soit suffisant pour tenir la pièce tout en permettant de la recentrer sous l'action des premiers mors 2A-2B lorsque ceux-ci entrent à leur tour en contact avec la pièce 9. L'épaisseur et la compressibilité de l'élément élastique 6 doivent être soigneusement sélectionnées afin de contrôler la course et la force de maintien au cours de cette période.

Lorsque les premiers mors 2A, 2B entrent à leur tour en contact avec la pièce 9, les déplacements ultérieurs du piston 7 sont bloqués ; la pression exercée par le système pneumatique commandant le piston est alors directement transmise à tous les mors afin de serrer la pièce et d'assurer son maintien précis pendant tout l'usinage. Le déplacement du piston est interrompu dès que la force nécessaire pour l'actionner dépasse une valeur de seuil.

### Numéros de référence employés sur les figures

- 1: Mandrin
- 2A, 2B: Première paire de mors
- 3A, 3B: Deuxième paire de mors
- 4: Deuxième support mobile (Pousse-mors esclave - inférieur)
- 40: Surface oblique
- 5: Premier support mobile (Pousse-mors maître - supérieur)
- 50: Surface oblique
- 51: Logement pour élément compressible
- 6: Element déformable élastiquement
- 7: Piston (ou tirant)
- 70: Saillie sur la surface externe du piston.
- 71: Filet, par exemple M14X1
- 8: Douille
- 9: Pièce à usiner
- 10: Billes
- 11: Goupilles d'appui
- 12: Rondelle ou bague acier
- 13: Filet, par exemple M28X1
- 14: Douille de réglage de tension
- a: Interstice entre pousse-mors inférieur et pousse-mors supérieur
- z: Axe longitudinal

## Revendications

1. Dispositif pour maintenir une pièce (9) lors de son usinage à l'aide d'au moins deux paires de mors (2A, 2B ; 3A, 3B), le dispositif comportant :
un piston (7) ;
un premier support mobile (5) lié à une première paire de surfaces obliques (50) agencées pour convertir les déplacements longitudinaux du premier support mobile en déplacements radiaux réciproques des mors (2A, 2B) de la première paire de mors,
un deuxième support mobile (4) lié à une deuxième paire de surfaces obliques (40) agencées pour convertir les déplacements longitudinaux du deuxième support mobile en déplacements radiaux réciproques des mors (3A, 3B) de la deuxième paire de mors, **caractérisé en ce que**
ledit piston (7) est lié auxdits supports mobiles de manière à entraîner simultanément les deux supports mobiles dans une première partie de la course du piston, puis uniquement un des deux supports mobiles (5) dans une seconde partie de la course du piston, de façon à ce que la deuxième paire de mors (3A, 3B) entre en contact avec la pièce avant la première paire de mors (2A, 2B).

2. Le dispositif de la revendication 1, comportant un empilement du premier support mobile (5) et du deuxième support mobile (4) séparés par un élément déformable élastiquement (6) ;
ledit empilement étant entraîné longitudinalement par ledit piston (7) ; ledit élément déformable élastiquement (6) étant comprimé lorsque les mors (3A, 3B) liés au deuxième support mobile (4) sont en appui contre la pièce (9), de manière à permettre au premier support mobile (5) de poursuivre sa course longitudinale sans le deuxième support mobile (4).

3. Le dispositif de la revendication 1, dans lequel les deuxièmes paires de surfaces obliques (40) sont en retrait par rapport aux premières paires de surfaces obliques (50) lorsque le dispositif est au repos, de manière à créer un déphasage entre le déplacement des premiers mors (2A, 2B) et le déplacement des deuxièmes mors (3A, 3B).

4. Le dispositif de l'une des revendications 1 à 3, dans lequel la position des mors (2A, 2B ; 3A, 38) par rapport aux supports mobiles respectifs (4, 5) peut être ajustée.

5. Le dispositif de l'une des revendications 1 à 4, dans lequel ledit piston (7) est actionné par un vérin hydraulique ou pneumatique.

6. Le dispositif de la revendication 1, dans lequel le premier support mobile (5) est solidaire du piston, dans lequel le deuxième support mobile (4) est entraîné par le premier support mobile (5) au travers d'un élément déformable élastiquement (6), dans lequel les deuxièmes mors (3A, 3B) liés au deuxième support mobile (4) sont agencés pour entrer en contact avec la pièce à usiner (9) avant les premiers mors (2A, 2B) liés au premier support mobiles (5), de manière à provoquer la compression dudit élément déformable élastiquement (6) lorsque seul le premier support mobile (5) poursuit sa course, le dispositif comportant une douille de réglage (14) de la compression dudit élément déformable élastiquement (6).

7. Le dispositif de la revendication 6, ladite douille de réglage (14) étant vissée sur le premier support mobile (5)

8. Procédé pour maintenir une pièce (9) lors de son usinage **caractérisé en ce qu'**il comporte les étapes suivantes :
déplacement simultané vers la pièce de deux paires de mors (2A, 28 ; 3A, 3B) sous l'action d'un seul piston ;
la pièce (9) est centrée par la deuxième paire de mors (3A, 38) avant que la première paire de mors (2A, 2B) n'entre en contact avec la pièce ;
la première paire de mors poursuit son déplacement;
la première paire de mors entre en contact avec la pièce qui est centrée en se déplaçant entre les mors de la deuxième paire ;
la première et la deuxième paire de mors sont serrées de manière à bloquer la pièce (9).

9. Le procédé de la revendication 8, comportant les étapes suivantes :
déplacement longitudinal d'un piston (7) de manière à entraîner simultanément deux supports mobiles (4, 5), le déplacement longitudinal de chacun desdits supports mobiles étant converti en déplacement radial réciproque d'une desdites paires de mors ;
lorsque ladite deuxième paire de dits mors entre en contact avec la pièce à usiner, poursuite du déplacement du piston de manière à déplacer uniquement le support mobile (5) correspondant à l'autre paire de mors.

10. Le procédé de la revendication 9, dans lequel les deux supports sont séparés par un élément déformable élastiquement (6) qui se déforme lorsque la deuxième paire de mors (3A, 3B) arrive en contact avec la pièce, de manière à permettre le déplacement de la première paire de mors (2A, 28).

## Claims

1. Device for holding a workpiece (9) during the machining by means of at least two pairs of jaws (2A, 2B; 3A, 3B), the device including:
a piston (7);
a first mobile support (5) connected to a first pair of inclined surfaces (59) arranged for converting the longitudinal displacements of the first mobile support in radial reciprocal displacements of the jaws (2A, 2B) of the first pair of jaws,
a second mobile support (4) connected to a second pair of inclined surfaces (40) arranged to convert the longitudinal displacements of the second mobile support into radial reciprocal displacements of the jaws (3A, 3B) of the second pair of jaws, **characterized in that**
said piston (7) is connected to said mobile supports in a manner as to drive at the same time the two mobile supports in a first part of the stroke of the piston, then only one of the two mobile supports (5) in a second part of the stroke of the piston, such that the second pair of jaws (3A, 3B) touches the workpiece before the first pair of jaws (2A, 2B).

2. The device of claim 1, comprising a superposition of the first mobile support (5) and of the second mobile support (4) separated by an elastic deformable element (6);
said superposition being driven longitudinally by said piston (7);
said elastic deformable element (6) being compressed when the jaws (3A, 3B) connected to said first mobile support (4) rest on the workpiece (9) so that the first mobile support (5) is allowed to continue its longitudinal displacement without the first mobile support (4).

3. The device of claim 1, in which the first pair of oblique surfaces (40) is shifted relative to the second pair of oblique surfaces (50), when the device is in rest, so as to generate a shift between the displacement of the first jaws (2A, 2B) and the displacement of the second jaws (3A, 3B).

4. The device of one of the claims from 1 to 3, wherein the position of the jaws (2A, 2B, 3A, 3B) relative to the corresponding mobile supports (4, 5) can be adjusted.

5. The device of one of the claims from 1 to 4, wherein said piston (7) is driven by a hydraulic or pneumatic jack.

6. The cevice of claim 1, wherein the first mobile support (5) is integral with the piston, wherein the second mobile support (4) is driven by the first mobile support (5) by means of an elastic deformable element (6), wherein the jaws of the second pair of jaws (3A, 3B) connected to the second mobile support (4) are arranged to touch the workpiece (9) before the jaws of the second pair of jaws (2A, 2B) connected to the first mobile support, so as to compress said elastic deformable element (6) when only the first mobile support (5) continues its displacement, the device including a bush (4) for adjusting the compression of said elastic deformable element (6).

7. The device of claim 6, wherein said bush (14) is screwed on said first mobile support (5).

8. Method of maintaining a workpiece during its machining **characterized by** the following steps:
• displacement at the same time towards the workpiece of two pairs of jaws (2A, 2B, 3A, 3B) under the action of a single piston;
• the workpiece is centred by the second pair of jaws (3A, 3B) before the first pair of jaws (2A, 2B) touches the workpiece;
• the first pair of jaws continue its displacement;
• the first pair of jaws touches the workpiece that is centred by moving between the jaws of the second pair;
• the first and the second pair are tightened so as to immobilize the workpiece (9).

9. The method of claim 8, comprising the steps:
• longitudinal displacement of a piston (7) so as to drive at the same time two mobile supports (4, 5), the longitudinal displacement of each of said mobile support being converted into reciprocal radial displacement of one of said pair of jaws;
• when said second pair of said jaws touches the workpiece, continuation of the displacement of the piston so as to drive only the mobile support (5) corresponding to the other pair of jaws.

10. The method of claim 9, wherein the two supports are separated by a deformable elastic element (6) that is deformed when said second pair of jaws (3A, 3B) touches the workpiece so as to allow the displacement of the first pair of jaws (2A, 2B).

## Patentansprüche

1. Vorrichtung, um ein Werkstück (9) während der Bearbeitung mit Hilfe von mindestens zwei Paaren von Spannfuttern (2A, 3B, 3A, 3B) zu halten; die Vorrichtung umfassend:
einen Kolben (7);
eine erste bewegliche Unterlage (5), die mit einem ersten Paar von schrägen Oberflächen (50) verbunden ist, angeordnet, um die longitudinalen Verschiebungen der ersten bewegliche Unterlage in radiale reziproke Verschiebungen der Spannfutter (2A, 2B) des ersten Paares der Spannfutter umzuwandeln;
eine zweite bewegliche Unterlage (4), die mit einem ersten Paar von schrägen Oberflächen (40) verbunden ist, angeordnet, um die longitudinalen Verschiebungen der zweiten bewegliche Unterlage in radiale reziproke Verschiebungen der Spannfutter (3A, 3B) des zweiten Paares der Spannfutter umzuwandeln; **gekennzeichnet, dadurch dass**
besagter Kolben (7) mit den besagten beweglichen Unterlagen derart verbunden sind, um gleichzeitig die zwei beweglichen Unterlagen in einem ersten Teil des Bewegungsablaufes des Kolbens anzutreiben, dann nur eine der zwei beweglichen Unterlagen in einem zweiten Teil des Bewegungsablaufes des Kolbens, in einer Weise, dass das zweite Paar der Spannfutter (3A, 3B) in Kontakt mit dem Werkstück vor dem ersten Teil der Spannfutter (2A, 2B) tritt.

2. Die Vorrichtung gemäss Anspruch 1, umfassend einen Stapel der ersten beweglichen Unterlage (5) und der zweiten beweglichen Unterlage (4), die durch ein elastisch deformierbares Element (6) getrennt sind,
besagter Stapel wird in Längsrichtung durch besagten Kolben (7) antrieben;
besagtes elastisch deformierbare Element (6) wird komprimiert, während die Spannfutter (3A, 3B), die mit der zweiten beweglichen Unterlage (4) verbunden sind, an dem Werkstück (9) anliegen, in einer Weise, um der ersten beweglichen Unterlage (5) zu erlauben, seinen Weg in Längsrichtung ohne die zweite bewegliche Unterlage (4) fortzufahren.

3. Die Vorrichtung gemäss Anspruch 1, in welcher die zweiten Paare der schrägen Oberflächen (40) in Bezug auf die ersten Paare der schrägen Oberfläche (50) zurückgesetzt sind, während die Vorrichtung in Ruhe ist, in einer Weise um eine Phasenverschiebung zwischen der Verschiebung der ersten Spannfutter (2A, 2B) und der Verschiebung der zweiten Spannfutter (3A, 3B) zu erzeugen.

4. Die Vorrichtung gemäss einem der Ansprüche 1 bis 3, in welcher die Position der Spannfutter (2A, 2B ; 3A, 3B) in Bezug auf die jeweiligen beweglichen Unterlagen (4, 5) anpassbar ist.

5. Die Vorrichtung gemäss einem der Ansprüche 1 bis 4, in welcher besagter Kolben (7) durch einen hydraulischen oder pneumatischen Zylinder angetrieben wird.

6. Die Vorrichtung gemäss Anspruch 1, in welcher die erste bewegliche Unterlage (5) mit dem Kolben vereint ist, in welcher die zweite bewegliche Unterlage (4) durch die erste bewegliche Unterlage (5) angetrieben wird mittels eines elastischen deformierbaren Element (6), in welchem die zweiten Spannfutter (3A, 3B), die der zweiten beweglichen Unterlage (4) verbunden sind, angetrieben werden, um vor den ersten Spannfuttern (2A, 2B), die mit der ersten beweglichen Unterlage (5) verbunden, in Kontakt mit dem zu bearbeitenden Werkstück (9) zu treten, in einer Weise um die Kompression des deformierbaren elastischen Elements (6) zu provozieren, während nur die erste bewegliche Unterlage seinen Weg fortsetzt, die Vorrichtung umfasst eine Kompressionsregelhülse (14) des deformierbaren elastischen Elements.

7. Die Vorrichtung gemäss Anspruch 6, besagte Kompressionsregelhülse (14) ist auf besage erste bewegliche Unterlage geschraubt.

8. Verfahren, um ein Werkstück (9) während der Bearbeitung zu halten; **gekennzeichnet, dadurch dass** es die folgenden Etappen umfasst:
gleichzeitige Verschiebung in Richtung des Werkstücks von zwei Paaren von Spannfuttern (2A, 2B ; 3A, 3B) unter der Einwirkung eines einzigen Kolbens;
das Werkstück (9) wird durch das zweite Paar von Spannfuttern (3a, 3B) zentriert, bevor das erste Paar der Spannfutter (2A, 2B) in Kontakt mit dem Werkstück tritt;
das erste Paar der Spannfutter setzt seine Verschiebung fort;
das erste Paar der Spannfutter tritt in Kontakt mit dem Werkstück, das zentriert ist, während es sich zwischen die Spannfutter des zweiten verschiebt;
das erste und das zweite Paar der Spannfutter sind in Weise gestrafft, um das Werkstück (9) zu blockieren.

9. Das Verfahren gemäss Anspruch 8, umfassend die folgenden Etappen:
Verschiebung in Längsrichtung eines Kolbens (7) in einer Weise, um gleichzeitig zwei bewegliche Unterlagen (4, 5) anzutreiben, die Verschiebung in Längsrichtung von jedem der besagten beweglichen Unterlagen wird in einer radiale reziproke Verschiebung von einer der besagten Paare der Spannfutter umgewandelt;
während besagtes zweites Paar von besagten Spannfuttern in Kontakt mit dem zu bearbeitenden Werkstück tritt, gefolgt von der Verschiebung des Kolbens, in einer Weise, um nur die bewegliche Unterlage (5), die zu dem anderen Paar des Spannfutters korrespondiert, zu bewegen.

10. Das Verfahren gemäss Anspruch 9, in welchem zwei Unterlagen durch ein elastisch deformierbares Element (6) getrennt sind, das sich deformiert, während das zweite Paar von Spannfuttern (3A, 3B) in Kontakt mit dem Stück kommt, in einer Weise, um die Verschiebung des ersten Paares der Spannfutter (2A, 2B) zu erlauben.
